# EUROPÄISCHE PATENTSCHRIFT

(11) **EP 2 769 029 B1**
(45) Veröffentlichungstag und Bekanntmachung des Hinweises auf die Patenterteilung: **06.11.2019**
(21) Anmeldenummer: 12809584.1
(22) Anmeldetag: 30.11.2012
(51) Int. Cl.: E03F 3/04, E03F 5/04, E01C 11/22

(54) **ENTWÄSSERUNGSEINRICHTUNG**
DRAINAGE DEVICE
DISPOSITIF DE DRAINAGE

(30) Priorität: 27.01.2012 DE 102012001574
(43) Veröffentlichungstag der Anmeldung: 27.08.2014
(73) Patentinhaber: 3P Technik Filtersysteme GmbH, 73032 Donzdorf (DE); H2O Research GmbH, 48155 Münster (DE)
(72) Erfinder: TORRAS-PIQUÉ, Jorge, 73337 Bad Überkingen (DE); DIERKES, Carsten, 48155 Münster (DE)
(74) Vertreter: Patentanwälte Magenbauer & Kollegen Partnerschaft mbB
(86) Internationale Anmeldenummer: PCT/EP2012/004945
(87) Internationale Veröffentlichungsnummer: WO 2013/110304

(56) Entgegenhaltungen:
- WO-A2-2008/073818
- WO-A2-2009/028893
- DE-U1-202008 000 787
- US-B1- 6 192 915
- US-B1- 6 368 499
- US-B1- 6 869 525
- US-B1- 7 381 333

## Beschreibung

Die Erfindung betrifft eine Entwässerungseinrichtung zur Entwässerung von Straßen-, Parkplatz- oder Dachflächen, mit einem eine Länge aufweisenden Rinnenkörper und im Rinnenkörper befindlichem Filtermaterial zur Reinigung mit Feststoffpartikeln und/oder gelösten Schadstoffen belastetem Wasser.

Eine Entwässerungseinrichtung ist beispielsweise aus der DE 20 2008 004 861 U1 bekannt. Die dort offenbarte Vorrichtung zur Abgabe von gefiltertem Regenwasser weist einen Rinnenkörper auf, der mit Filtergranulat befüllt ist. In das Filtergranulat ist ein Halbdrainagerohr eingebettet, über das eine Entwässerung des gefilterten Wassers stattfindet. Mit der Zeit setzt sich das Filtergranulat mit Filtrationsrückständen zu, so dass der Bedarf besteht, das Filtergranulat auszutauschen. Dazu ist es notwendig, das Filtergranulat aus dem Rinnenkörper zu entfernen, was in der Regel durch Absaugen geschieht. Ferner ist auch eine Entfernung von Filtergranulat notwendig, falls das Halbdrainagerohr gewartet werden soll.

Die WO 2009/028893 A2 offenbart eine Entwässerungsrinne in, die eine Filterbox mit mehreren Filterschichten mit voneinander verschiedenem Filtermaterial, beispielsweise Kieselschüttung, Zeolithkörner oder Kokosfasern.

Die US 6,368,499 B1 offenbart einen Gulli, mit einem Einlaufgitter, an dem mittels Ketten ein Filterträger aufgehängt ist, wobei im Filterträger ein Filtersack mit Filtermaterial aufgenommen ist, wodurch einströmendes Regenwasser gefiltert wird.

Die WO 2008/073818 A2 offenbart eine Entwässerungsrinne, in die Filtermaterial eingefüllt ist. Das Filtermaterial ist lose in der Entwässerungsrinne aufgenommen.

Die DE 20 2008 000 787 U1 offenbart eine Entwässerungsvorrichtung mit einer Rinneneinheit zur Aufnahme von Oberflächenwasser und einem Filterelement zur Reinigung des Oberflächenwassers, wobei das Filterelement ein Filterohr umfasst, das zumindest abschnittsweise in der Rinneneinheit aufgenommen ist.

Die US 7,381,333 B1 offenbart ein Verfahren zur Behandlung von Oberflächenwasser mittels kerzenförmiger Filterelemente, die hängend am Filtereinlauf befestigt sind.

Die US 6,192,915 B1 offenbart einen Schmutzwassereinlauf mit einem Gitterrost, einem unter dem Gitterrost angeordneten Laub-Rückhaltebecken und einem mit einem Ablauf versehenen Behälter, in dem vor dem Ablauf ein von einem Schwimmer gesteuertes Ventil angeordnet ist, das den Ablauf verschließt, wenn die im Behälter befindliche Flüssigkeit leichter ist als Wasser. Dem Ventil ist ein Koaleszenzfilter vorgestaltet, der dazu geeignet ist, aus dem durchströmenden Abwasser kleine und kleinste Öl- oder Bezintröpfchen herauszufiltern. Der Behälter besitzt einen Sedimentationsraum, der über ein Fallrohr mit einem unterhalb des Sedimentationsraums angeordneten Sammelraum verbunden ist. Vom Sammelraum tritt dann Wasser in die Filterkammer mit dem Filter und dem Ventil ein.

Die US 6,869,525 B1 offenbart ein Oberflächenwasserfiltersystem mit einer Sedimentationskammer und einem oberhalb der Sedimentationskammer am Überlauf angeordneten um den Umfang des Überlaufs herum angeordneten Filterschlauch zur Filterung des überlaufenden Oberflächenwassers.

Aufgabe der Erfindung ist es, eine Entwässerungseinrichtung der eingangs erwähnten Art zu schaffen, mit der sich eine effektivere Filteration von verunreinigtem Wasser durchführen lässt.

Diese Aufgabe wird durch eine Entwässerungseinrichtung mit den Merkmalen des unabhängigen Anspruchs 1 gelöst. Weiterbildungen der Erfindung sind in den Unteransprüchen dargestellt. Die erfindungsgemäße Entwässerungseinrichtung zeichnet sich dadurch aus, dass der Durchströmungsabschnitt des Wassereinlaufkörpers von einer domartigen Erhebung gebildet ist, die von dem grabenartig ausgebildeten Sedimentationsraum umschlossen ist.

Im Normalfall wird verunreinigtes Wasser zunächst in den Sedimentationsraum geleitet, wo sich Schwebstoffe absetzen können. Durch das Ansteigen des Wasserspiegels des Sedimentationsraums kann dann Wasser über die Durchströmungsöffnungen aus dem Wassereinlaufkörper heraustreten und zur Filtervorrichtung gelangen. Bei starken Niederschlägen, beispielsweise Regen, lässt sich Wasser auch teilweise oder ganz unter Umgehung des Sedimentationsraums direkt in die Durchströmungsöffnungen leiten, was einen höheren Wasserdurchsatz ergibt.

Bei einer Weiterbildung der Erfindung ist es möglich, die Filterelemente bei Bedarf in einfacher Weise aus dem Rinnenkörper zu entfernen. Eine Absaugung von Filtergranulat, wie beispielsweise beim vorstehend erwähnten Stand der Technik, ist nicht mehr notwendig. Ferner lassen sich hier gezielt einzelne Filterelemente austauschen, während andere Filterelemente im Rinnenkörper verbleiben können. Dies ist beispielsweise dann sinnvoll, wenn entlang des Rinnenkörpers an einer bestimmten Stelle eine Wartung oder Reparatur durchzuführen ist. Insgesamt bietet die Entwässerungseinrichtung einen erheblichen Zeitvorteil beim Austausch von Filtermaterial, bei der Wartung, Revision oder Reparatur, was nicht unerhebliche Kostenvorteile ergibt.

Bei einer Weiterbildung der Erfindung ist die wasserdurchlässige Hüllwand flexibel ausgebildet. In besonders bevorzugter Weise wird die wasserdurchlässige Hüllwand von einer insbesondere aus Textilgewebe bestehenden Sackhülle gebildet. In diesem Fall können die Filterelemente als mit Filtermaterial gefüllte Filtersäcke bezeichnet werden. Alternativ wäre es auch denkbar, dass die Hüllwand starr ist, so dass das Filterelemente beispielsweise als mit Filtermaterial gefüllte Behälter ausgebildet sein können.

Bei einer Weiterbildung der Erfindung weist die Filtervorrichtung wenigstens einen im Rinnenkörper insbesondere lösbar befestigten, wasserdurchlässigen Filterelementträger für die Filterelemente auf. Hierzu ist es möglich, dass der Filterelementträger im Rinnenkörper verbleibt und lediglich einzelnen Filterelemente herausgenommen werden können. Alternativ ist es jedoch auch möglich, dass Filterelementträger und Filterelemente gemeinsam ein aus dem Rinnenkörper entnehmbares Filtermodul bilden. Zweckmäßigerweise sind die Filterelemente derart angeordnet, dass sie die gesamte Breite des Rinnenkörpers bedecken. Die Filterelemente lassen sich in Rinnenlängsrichtung hintereinander anordnen. Die Filterelemente können einlagig oder mehrlagig übereinander angeordnet sein.

Als Alternative zu dem wasserdurchlässigen Filterelementträger können die Filterelemente auch selbsttragend ausgebildet sein, beispielsweise im Falle von mit Filtermaterial gefüllten Filterbehältern. In diesem Fall können die selbsttragenden Filterelemente direkt lösbar im Rinnenkörper befestigt sein.

Im Falle von Filterelementen mit flexibler Hüllwand, also beispielsweise Filtersäcken, können sich diese an die Form des Filterelementträgers anschmiegend und dichtend an eine Innenwand des Rinnenkörpers anliegend auf dem Filterelementträger befinden. Eine Dichtwirkung zwischen den Filterelementen und der Innenwandung des Rinnenkörpers ist wichtig, um Filterelemente umgehende Bypassströmungen zu verhindern. Im Falle von Filtersäcken kann diese Dichtwirkung durch einen Anpressdruck der Filtersäcke an die Innenwandung des Rinnenkörpers erzielt werden. Dadurch sind separate Dichtelemente nicht mehr notwendig.

Bei einer Weiterbildung der Erfindung ist der Filterelementträger oberhalb eines Rinnenbodens des Rinnenkörpers angeordnet, wobei unterhalb des Filterelementträgers von einem unteren Bereich des Rinnenkörpers eine Ablaufrinne für gereinigtes Wasser gebildet ist. Je nach Abstand des Filterelementträgers zum Rinnenboden wird hier also eine Ablaufrinne mit größerem oder kleinerem Querschnitt gebildet. Es kann also ein relativ großer Bereich des Rinnenkörpers für den Abfluss von gereinigtem Wasser genutzt werden. Dadurch können hohe Abflussleistungen erzielt werden. Im Gegensatz hierzu ist die Abflussleistung beim zuvor erwähnten Stand der Technik relativ gering, da der Rohrquerschnitt des Halbdrainagerohrs aus dem Stand der Technik in der Regel relativ klein gewählt wird, um möglichst viel Filtergranulat im Rinnenkörper unterzubringen. Als Alternative zur Entwässerungs- bzw. Regenrinne, lässt sich die Erfindung auch auf eine Sickermulde übertragen. In diesem Fall wird aus der Filtervorrichtung gereinigtes Wasser zur Versickerung im Erdreich weitergeleitet.

Bei einer Weiterbildung der Erfindung ist als Filtermaterial eine Schüttung aus Filterkörnern eingesetzt. Besonders bevorzugt werden Körner aus Ionenaustauschermaterial verwendet.

In besonders bevorzugter Weise ist das Wasserleitelement derart oberhalb des Sedimentationsraums angeordnet, dass Wasser ab einer bestimmten anfallenden Wassermenge mittels einer Schanzenwirkung zumindest teilweise unter Umgehung des Sedimentationsraums direkt in die Durchströmungsöffnungen geleitet werden kann. Das Wasserleitelement kann positionsfest oder verstellbar ausgebildet sein. Bei einem verstellbaren Wasserleitelement ließe sich beispielsweise Länge oder Neigung verstellen.

In besonders bevorzugter Weise weist das Wasserleitelement eine nach innen und unten geneigte Einlaufschräge auf. Das Wasserleitelement kann von einem umlaufenden Rand des Wasserleitkörpers gebildet werden. Zweckmäßigerweise ist dieser Rand unterbrechungslos.

Erfindungsgemäß ist der Durchströmungsabschnitt des Wassereinlaufkörpers von einer insbesondere aus dem Bodenmaterial des Wassereinlaufkörpers herausgebildeten domartigen Erhebung gebildet, der von dem grabenartig ausgebildeten Sedimentationsraum umschlossen ist.

Bei einer Weiterbildung der Erfindung kann der **Wassereinlaufkörper** auf die Filterelemente der Filtervorrichtung aufgesetzt sein. Durch das Gewicht des Wassereinlaufkörpers und des im Wassereinlaufkörper befindlichen Wassers wird Druck auf die Filterelemente ausgeübt, so dass im Falle von als Filtersäcke ausgebildeten Filterelementen zusätzlicher Anpressdruck für die Abdichtung an der Innenwandung des Rinnenkörpers erzielbar ist.

Besonders zweckmäßig ist der Wassereinlaufkörper ein separat von dem Filtermodul handhabbares Bauteil. Es ist also möglich, den Wassereinlaufkörper aus dem Rinnenkörper zu entnehmen, ohne dass die Filtervorrichtung mit herausgenommen werden muss. Insgesamt wird von dem Filtermodul und von dem Wassereinlaufkörper gemeinsam ein Entwässerungsmodul gebildet, das sich auch als Einheit aus dem Rinnenkörper entnehmen lässt. Zweckmäßigerweise befinden sich in Rinnenlängsrichtung des Rinnenkörpers mehrere solcher Entwässerungsmodule hintereinander angeordnet.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels der erfindungsgemäßen Entwässerungseinrichtung,
- Figur 2: einen Längsschnitt durch die Entwässerungseinrichtung von Figur 1 entlang der Linie II-II,
- Figur 3: eine vergrößerte perspektivische Ansicht der erfindungsgemäßen Entwässerungseinrichtung von Figur 1,
- Figur 4: einen Querschnitt durch die Entwässerungseinrichtung von Figur 1 entlang der Linie IV-IV
- Figur 5: eine perspektivische Darstellung der Entwässerungseinrichtung von Figur 1 ohne Rostabdeckung,
- Figur 6: eine perspektivische Darstellung eines Entwässerungsmoduls der Entwässerungseinrichtung von Figur 1,
- Figur 7: eine perspektivische Darstellung eines Filtermoduls bestehend aus Filterelementträger und Filterelementen,
- Figur 8: eine perspektivische Darstellung des Filterelementträgers,
- Figur 9: eine perspektivische Darstellung des Wassereinlaufkörpers der Entwässerungseinrichtung und
- Figur 10: einen Schnitt durch den Wassereinlaufkörper von Figur 9 entlang der Linie X-X.

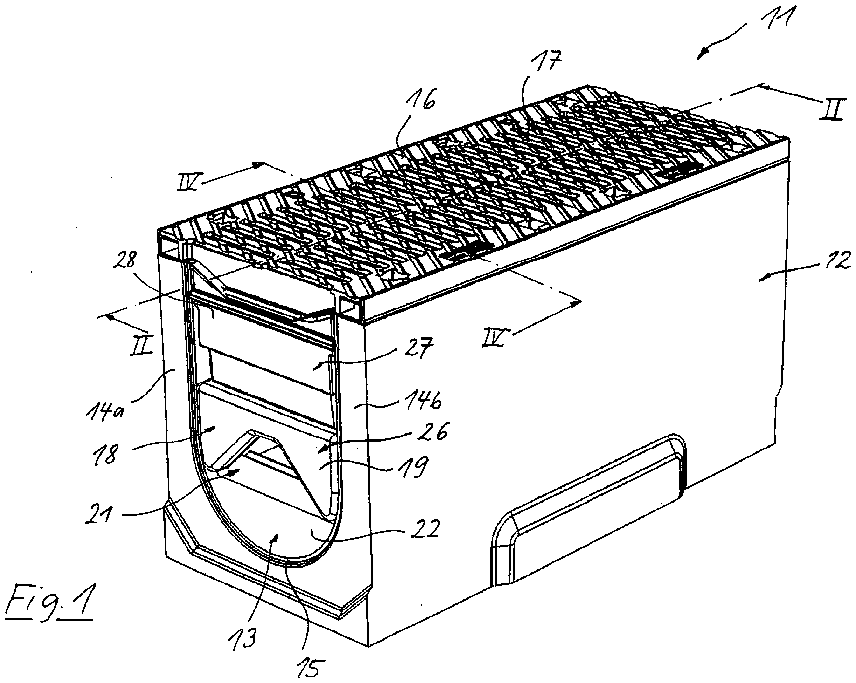

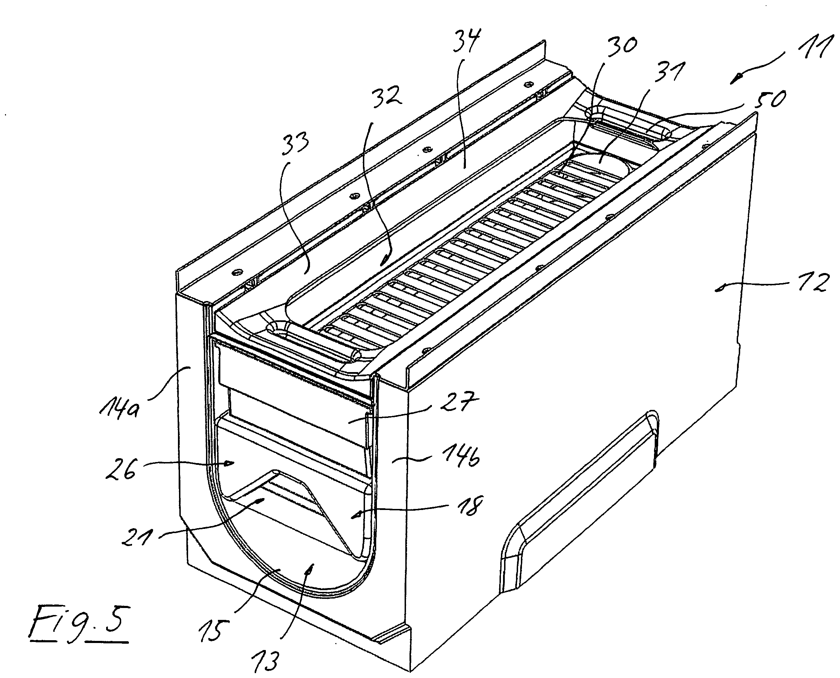

Die Figuren 1 bis 10 zeigen ein bevorzugtes Ausführungsbeispiel der erfindungsgemäßen Entwässerungseinrichtung 11. Die Entwässerungseinrichtung 11 dient zur Entwässerung großer Flächen, beispielsweise Straßen-, Parkplatz- oder Dachflächen. Die erfindungsgemäße Entwässerungseinrichtung 11 wird im Folgenden beispielhaft in der Ausgestaltung als Entwässerungsrinne bzw. Regenrinne erläutert. Die Entwässerungseinrichtung 11 könnte jedoch auch als Sickermulde ausgestaltet sein.

Wie in den Figuren 1 bis 5 gezeigt, besitzt die Entwässerungseinrichtung 11 einen Rinnenkörper 12, der beispielsweise aus Beton besteht. Der Rinnenkörper 12 ist in der Regel in das Erdreich eingegraben. Im Rinnenkörper 12 befindet sich eine Rinne 13, die beispielhaft mit rechteckigem Querschnitt und daran angesetztem Kreisabschnitt gezeigt ist. Der Rinnenkörper 12 ist, wie die Bezeichnung bereits vermuten lässt, nach oben offen, wobei die Rinne 13 seitlich von zwei Seitenwänden 14a, 14b des Rinnenkörpers 12 begrenzt wird, während das untere Ende des Rinnenkörpers 12 den Rinnenboden 15 bildet.

Wie insbesondere in Figur 1 dargestellt, ist das obere Ende des Rinnenkörpers 12 mittels einer Rostabdeckung 16 abgedeckt. In der Rostabdeckung 16 befinden sich mehrere Einlauföffnungen 17, über die verunreinigtes Wasser in die Rinne 13 gelangen kann. Die Rostabdeckung 16 schließt plan mit der zu entwässernden Fläche, beispielsweise Parkplatzfläche oder Straßenfläche ab. Die Entwässerungseinrichtung 11, also insbesondere der Rinnenkörper 12 mit der Rostabdeckung 16, ist befahrbar. Das Material des Rinnenkörpers 12 und das Material der Rostabdeckung 16, die insbesondere aus Metallmaterial besteht, können derart gewählt sein, dass eine Schwerlastbefahrung möglich ist.

Wie insbesondere in den Figuren 1 bis 5 dargestellt, ist in der Rinne 13 eine Filtervorrichtung 18 angeordnet. Die Filtervorrichtung 18 weist mehrere einzeln handhabbare und bei Bedarf aus dem Rinnenkörper 12 entnehmbare Filterelemente 19 auf, die jeweils eine wasserdurchlässige Hüllwand 20 mit innerhalb der Hüllwand 20 befindlichem Filtermaterial besitzt. Gemäß dem bevorzugten Ausführungsbeispiel ist eine flexible wasserdurchlässige Hüllwand 20 vorgesehen, die von einer Sackhülle gebildet ist. Die Sackhülle ist aus Textilgewebe und ist mit dem Filtermaterial befüllt, so dass auch insgesamt von einem Filtersack gesprochen werden kann.

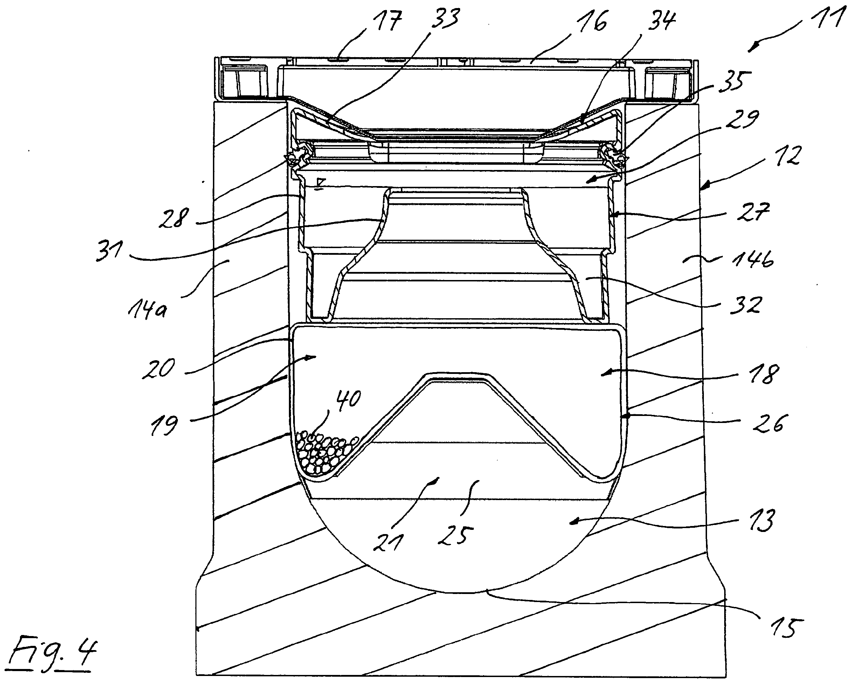

Je nach Anforderung an die Reinigung des Oberflächenwassers sind unterschiedliche Filtermaterialien einsetzbar. Es ist beispielsweise möglich, dass als Filtermaterial eine Schüttung aus Filterkörnern 40 (Fig. 4) eingesetzt wird. Zweckmäßigerweise besitzen die Filterkörner 40 eine einheitliche Gestalt, beispielsweise Kugelgestalt. In einer derartigen Schüttung lassen sich beispielsweise die Anforderungen gemäß dem Trennerlass erfüllen, so dass derartig gereinigtes Wasser nicht mehr zusätzlich in einem Regenklärbecken gefiltert werden muss.

Für erhöhte Anforderungen, beispielsweise bei mit gelösten Schadstoffen belastetem Wasser, ist es möglich, einen Ionenaustauscher in Körnerform als Filtermaterial einsetzen. Mit einem derartigen Filtermaterial lassen sich beispielsweise auch gelöste Schwermetall-Ionen herausfiltern. Es wird zudem ein hoher AFS-Rückhalt erzielt.

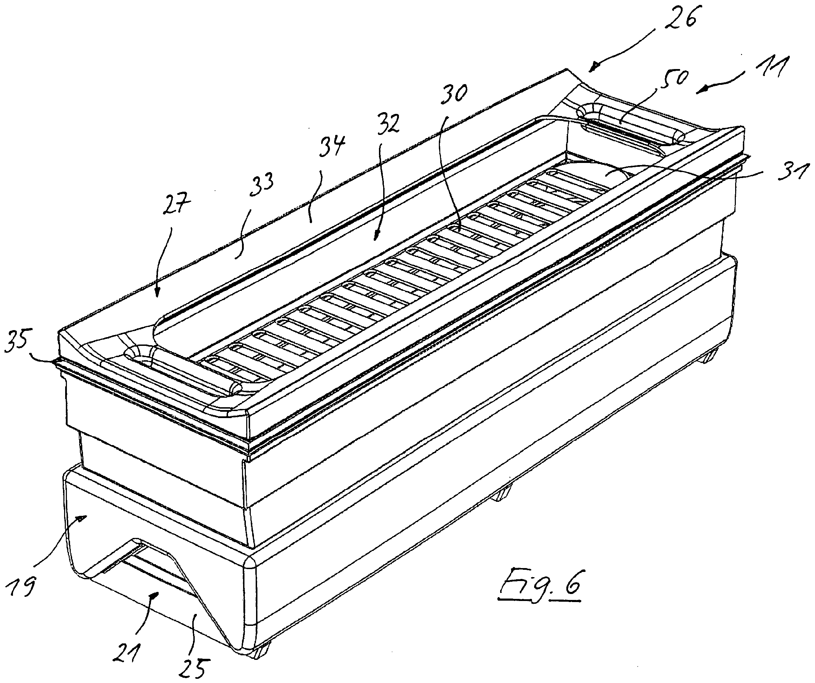

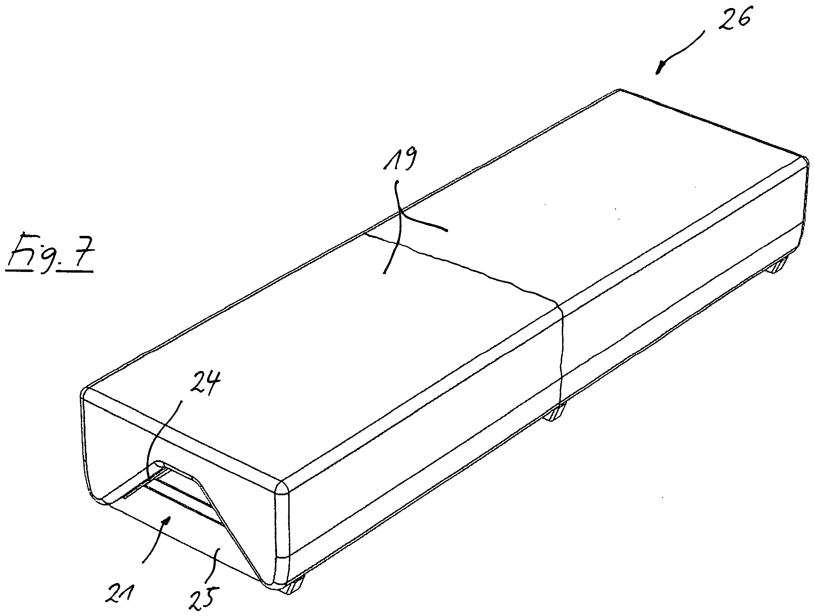

Wie insbesondere in den Figuren 6 und 7 gezeigt, besitzt die Filtervorrichtung 18 wenigstens einen wasserdurchlässigen Filterelementträger 21, auf dem die Filterelemente 19, also beispielsweise Filtersäcke, angeordnet sind. Dabei schmiegen sich die Filtersäcke an die Form des Filterelementträgers 21 an, gleichzeitig liegen die Filtersäcke an der Innenwandung 22 des Rinnenkörpers 12 an und sorgen für eine Abdichtung zwischen der Außenseite Sackhülle und der Innenwandung 22 des Rinnenkörpers 12, wodurch unerwünschte Bypass-Strömungen vermieden werden.

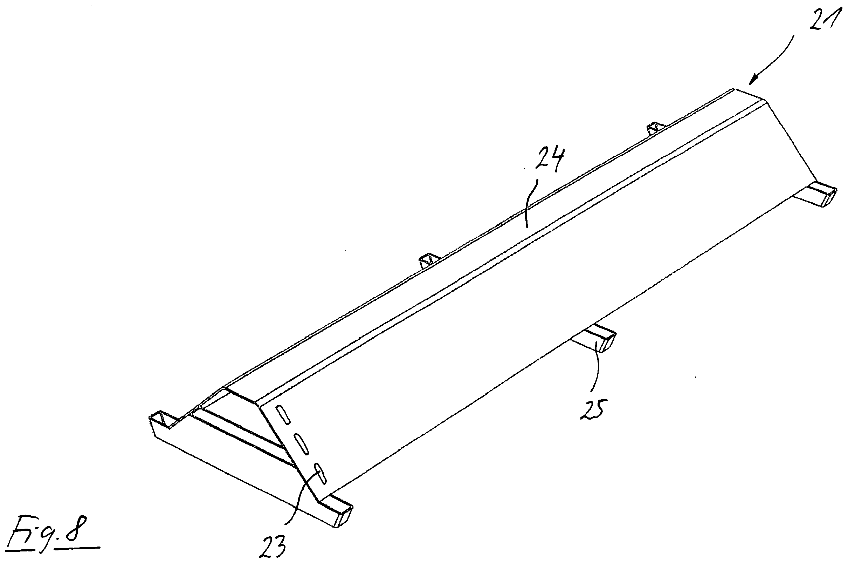

Wie in Figur 8 gezeigt, kann der Filterelementträger 21 als ein mit einer Vielzahl von Ablauföffnungen 23, beispielsweise in Schlitzform, versehenes Blechprofil ausgestaltet sein. Der Filterelementträger 21 besitzt einen Basisabschnitt 24, der beispielsweise von dem Blechprofil gebildet sein kann. Der Basisabschnitt 24 kann beispielsweise nach Art eines Sattels ausgestaltet sein. Auf dem Basisabschnitt 24 liegen dann die Filtersäcke auf. Dabei erstrecken sich die Filtersäcke über die gesamte Breite der Rinne 13, stoßen also einerseits an die eine Innenwand und andererseits an die gegenüberliegende andere Innenwand des Rinnenkörpers 12 an. Unterhalb des Basisabschnitts 24 des Filterelementträgers 21 befinden sich schienenartige Stützabschnitte 25, über die der Filterelementträger 21 im Rinnenkörper 12 gehaltert ist. Da die Rinne 12 im Beispielsfall nach unten in einen Kreisabschnitt ausläuft und sich daher eine Querschnittsverkleinerung ergibt, ist es nicht notwendig, den Filterelementträger 21 über separate Befestigungsmittel an der Innenwandung 22 des Rinnenkörpers 12 zu befestigen. Ein Halt in der Rinne 13 ergibt sich allein bereits auf Grund der Keilwirkung zwischen dem Stützabschnitt 25 und dem sich verjüngenden Querschnitt der Rinne 13. In alternativer Ausgestaltung kann der Basisabschnitt auch ablaufföffnungslos, also beispielsweise als durchgehendes Blechprofil ausgebildet sein. In diesem Fall endet der Basisabschnitt in radialer Richtung, wie in Figur 8 dargestellt, mit Abstand vor der Innenwandung des Rinnenkörpers 12. Er ist also kürzer als der Stützabschnitt 25. Daher bildet zwischen der Außenkante des Basisabschnitts und der Innenwandung ein in Rinnen-Längsrichtung verlaufender Ablaufspalt. Bei dieser Variante ist das Wasser gezwungen, innerhalb des Filtersacks nach unten und außen zu strömen, bis es zum Ablaufspalt gelangt und dort abläuft. Die Verweildauer des zu reinigenden Wassers im Filtersack wird dadurch erhöht.

Der Filterelementträger 21 befindet sich also oberhalb des Rinnenbodens 15, wobei sich unterhalb des Filterelementträgers 21 daher eine Ablaufrinne bildet, über die gereinigtes Wasser ablaufen kann. Insgesamt bilden der Filterelementträger 21 und die Filterelemente 19 in Form der Filtersäcke ein gemeinsam aus dem Rinnenkörper 12 entnehmbares Filtermodul 26. Die Filtervorrichtung 18 besitzt mehrere solcher Filtermodule 26, die in Rinnenlängsrichtung hintereinander aufgereiht sind.

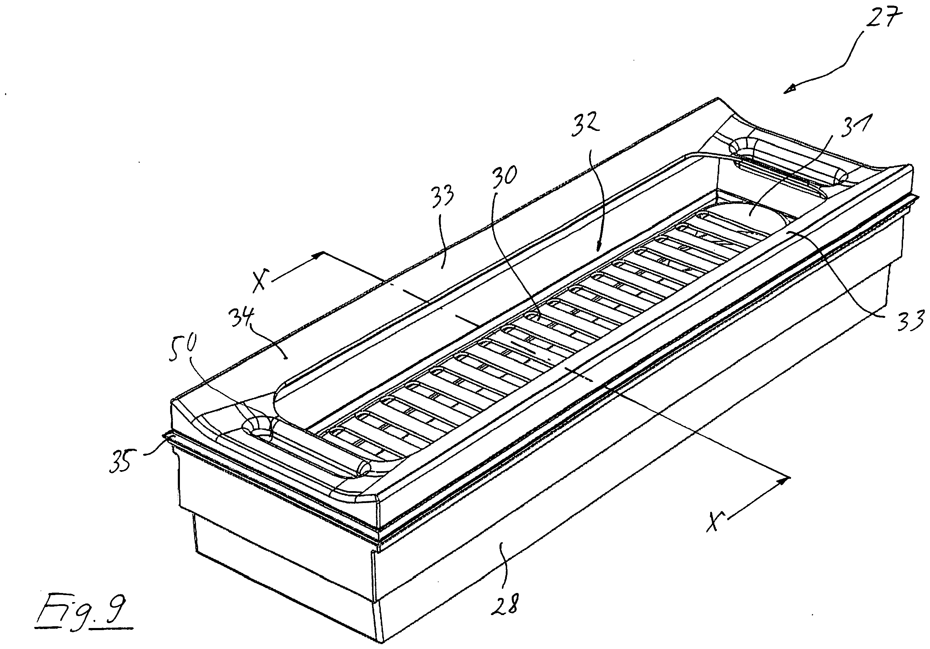

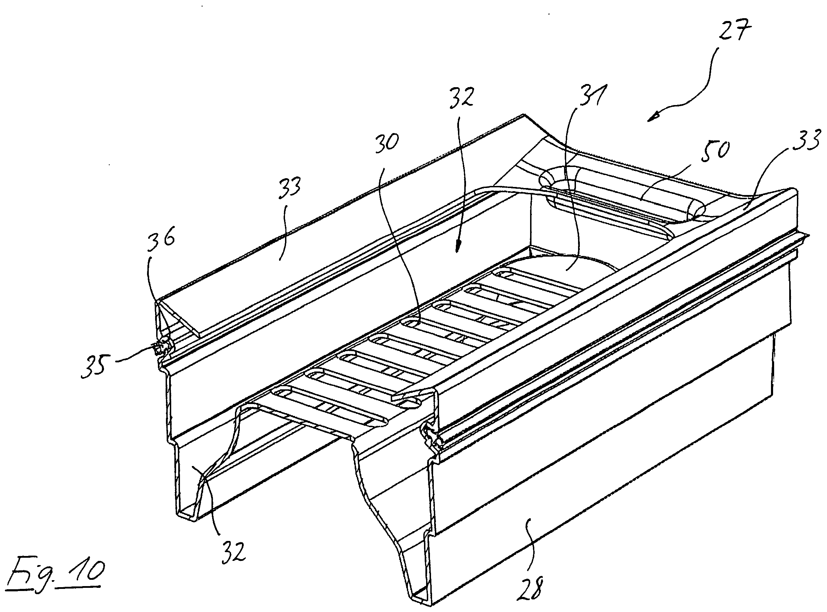

Wie insbesondere in den Figuren 1 bis 5 gezeigt, befindet sich oberhalb der Filtervorrichtung 18 ein Wassereinlaufkörper 27, über den über die Rostabdeckung 16 in die Rinne eindringendes Wasser einläuft. Der Wassereinlaufkörper 27 ist zweckmäßigerweise als Kunststoffbauteil ausgestaltet. Wie insbesondere in den Figuren 9 und 10 gezeigt, besitzt der Wassereinlaufkörper 27 einen kastenförmigen Basisabschnitt 28, der eine Wasserkammer 29 umschließt. Die Wasserkammer 29 ist grundsätzlich in zwei unterschiedliche Abschnitte unterteilt. Zum einen ist ein mit mehreren Durchströmöffnungen 30 versehener Durchströmungsabschnitt 31 vorgesehen, der von einer domartigen Erhebung des Bodens des Wassereinlaufkörpers 27 gebildet wird. Weiterhin besitzt die Wasserkammer 29 einen Sedimentationsraum 32, der grabenartig um die domartige Erhebung des Durchströmungsabschnitts 31 herum verläuft, diesen also umschließt.

Der Sedimentationsraum 32 dient zur Sedimentation bzw. Ablagerung von Schwebstoffen. Verunreinigtes Wasser läuft dann von dem Sedimentationsraum 32 zum Durchströmungsabschnitt, wo es über die Durchströmungsöffnungen 31 in die darunter liegende Filtervorrichtung 18 gelangt.

Ein wichtiger Aspekt ist, dass der Wassereinlaufkörper 27 wenigstens ein Wasserleitelement 33 aufweist, über das RohWasser in den Sedimentationsraum 32 und von dort in die Durchströmungsöffnungen 30 oder zumindest teilweise unter Umgehung des Sedimentationsraums 32 direkt in die Durchströmungsöffnungen 30 geleitet werden kann.

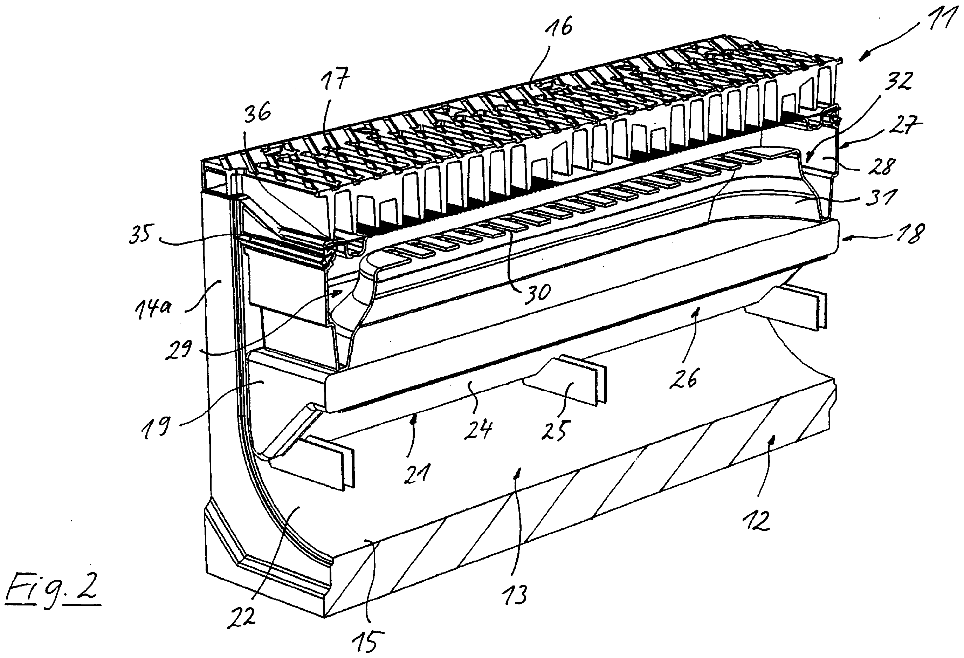

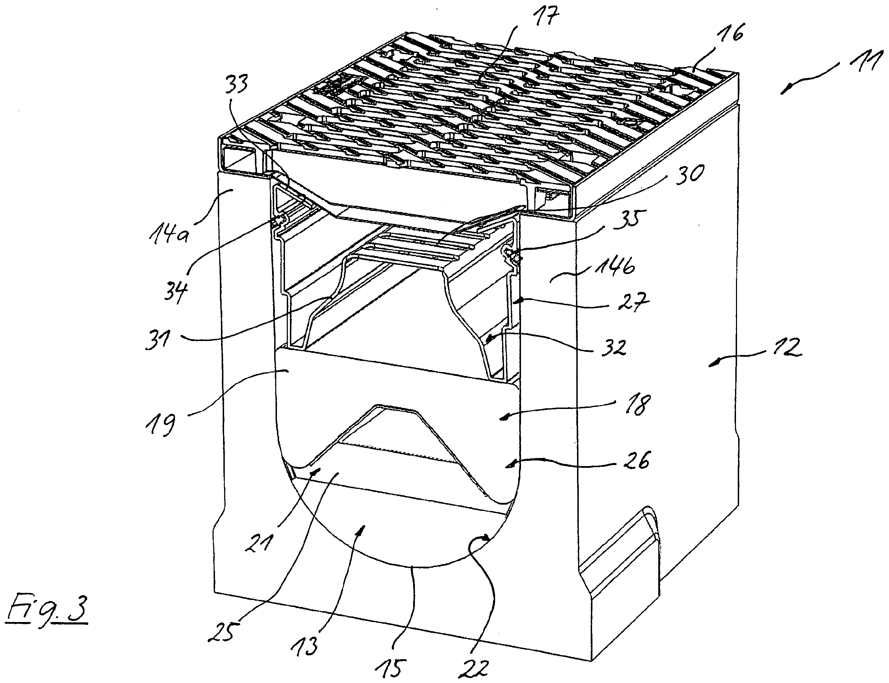

Das Wasserleitelement 33 wird im Beispielsfall durch einen lippenartigen, umlaufenden oberen Rand des Wassereinlaufkörpers 27 gebildet, der nach innen in den Bereich der Wasserkammer 29 hinein steht. Das Wasserleitelement 33 besitzt eine nach innen und unten geneigte Einlaufschräge 34. Verunreinigtes Wasser gelangt ab einer bestimmten anfallenden Wassermenge mittels einer Schanzenwirkung zumindest teilweise unter Umgehung des Sedimentationsraums 32 direkt zu den Durchströmungsöffnungen 30. Dadurch lassen sich bei Starkniederschlägen, beispielsweise Starkregen, erhöhte Wasserdurchsätze erzielen, so dass Aufstauungen vermieden werden. Wie insbesondere in den Figuren 2 und 3 dargestellt, ist der Wassereinlaufkörper 27 auf die Filtersäcke aufgesetzt. Dabei bewirkt der durch das Gewicht des Wassereinlaufkörpers und des darin befindlichen Wassers ausgeübte Druck für eine zusätzliche Anpressung der Filtersäcke an die Innenwandung 22 des Rinnenkörpers 12.

Zur Verhinderung von Bypassströmungen zwischen der Innenwandung des Rinnenkörpers 12 und der Außenwand des Wassereinlaufkörpers 27 ist eine Dichtung vorgesehen. Es können beispielsweise Dichtlippen 35 vorgesehen sein, die jeweils in einer hierfür ausgebildeten Dichtungsnut 36 an der Außenseite des Basisabschnitts 28 des Wassereinlaufkörpers eingesetzt sind.

Insgesamt bilden der Wassereinlaufkörper 27 und das darunter liegende Filtermodul 26 aus Filterelementen 19, also Filtersäcken, und Filterelementträger 21 ein Entwässerungsmodul. Dieses Entwässerungsmodul lässt sich als Einheit aus dem Rinnenkörper 12 entnehmen. Es ist jedoch auch möglich, lediglich den Wassereinlaufkörper 27 zu entnehmen, während das Filtermodul 26 im Rinnenkörper verbleibt. Zur Entnahme des Wassereinlaufkörpers 27 sind insbesondere an den beiden entgegengesetzt zueinander angeordneten Stirnseiten des Wassereinlaufkörpers 27 Handgriffe 50 vorgesehen.

Zur Entwässerung der angeschlossenen Fläche, beispielsweise Parkplatzfläche, Straßenfläche oder auch Dachfläche tritt verunreinigtes Wasser zunächst über die Einlauföffnungen 17 der Rostabdeckung 16 in die Rinne 13 ein. Bei normalem Wasseranfall gelangt dieses zunächst über die Einlaufschräge 34 des Wasserleitelements 33 in den Sedimentationsraum 32, wo sich Schwebstoffe ablagern. Danach strömt verunreinigtes Wasser über die Durchströmungsöffnungen 30 des Durchströmungsabschnitts 31 in das darunterliegende Filtermodul 26, wo es durch die wasserdurchlässige Hüllwand 20 aus Sackmaterial in das Filtermaterial eintritt und dort gefiltert wird. Danach tritt gefiltertes, gereinigtes Wasser aus den Filtersäcken aus und strömt über die Ablauföffnungen 23 im Basisabschnitt 24 des Filterelementträgers 21 in die darunter liegende Ablaufrinne, von wo es dann ablaufen kann.

## Patentansprüche

1. Entwässerungseinrichtung (11) zur Entwässerung von Straßen-, Parkplatz- oder Dachflächen, mit einem eine Länge aufweisenden Rinnenkörper (12) und im Rinnenkörper (12) befindlichem Filtermaterial zur Reinigung von mit Feststoffpartikeln und/oder gelösten Schadstoffen belastetem Wasser, wobei oberhalb des Filtermaterials ein Wassereinlaufkörper (27) angeordnet ist, der einen mit mehreren Durchströmungsöffnungen (30) versehenen Durchströmungsabschnitt (31) aufweist, über den verunreinigtes Wasser in das Filtermaterial gelangt, und einen Sedimentationsraum (32) zur Sedimentation von Schwebstoffen besitzt, wobei der Wassereinlaufkörper (27) wenigstens ein Wasserleitelement (33) aufweist, über das verunreinigtes Wasser in den Sedimentationsraum (32) und von dort in die Durchströmungsöffnungen (30) oder zumindest teilweise unter Umgehung des Sedimentationsraums (32) direkt in die Durchströmungsöffnungen (30) leitbar ist, **dadurch gekennzeichnet, dass** der Durchströmungsabschnitt (31) des Wassereinlaufkörpers (27) von einer domartigen Erhebung gebildet ist, die von dem grabenartig ausgebildeten Sedimentationsraum (32) umschlossen ist.

2. Entwässerungseinrichtung nach Anspruch 1, **dadurch gekennzeichnet, dass** das Wasserleitelement (33) derart oberhalb des Sedimentationsraums (32) angeordnet ist, dass Wasser ab einer bestimmten anfallenden Wassermenge mittels einer Schanzenwirkung zumindest teilweise unter Umgehung des Sedimentationsraums (32) direkt in die Durchströmungsöffnungen (30) leitbar ist.

3. Entwässerungseinrichtung nach Anspruch 1 oder 2, **dadurch gekennzeichnet, dass** das Wasserleitelement (33) eine nach innen und unten geneigte Einlaufschrägfläche (34) aufweist.

4. Entwässerungseinrichtung nach einem der vorhergehenden Ansprüche, **dadurch gekennzeichnet, dass** das Wasserleitelement (33) von einem umlaufenden Rand des Wasserleitkörpers (27) gebildet ist.

5. Entwässerungseinrichtung nach einem der vorhergehenden Ansprüche, **dadurch gekennzeichnet, dass** der Wassereinlaufkörper (27) auf Filterelemente (19) einer Filtervorrichtung (18) aufgesetzt ist.

6. Entwässerungseinrichtung nach einem der vorhergehenden Ansprüche, **dadurch gekennzeichnet, dass** das Filtermaterial Bestandteil einer sich im Wesentlichen über die Länge des Rinnenkörpers (12) erstreckenden Filtervorrichtung (18) ist, die mehrere einzeln handhabbare und bei Bedarf aus dem Rinnenkörper (12) entnehmbare Filterelemente (19) aufweist, die jeweils eine wasserdurchlässige Hüllwand (20) mit dem innerhalb der Hüllwand (20) befindlichen Filtermaterial besitzen.

7. Entwässerungseinrichtung nach Anspruch 6, **dadurch gekennzeichnet, dass** die wasserdurchlässige Hüllwand (20) flexibel ist.

8. Entwässerungseinrichtung nach Anspruch 6 oder 7, **dadurch gekennzeichnet, dass** die wasserdurchlässige Hüllwand (20) von einem Sack gebildet ist.

9. Entwässerungseinrichtung nach einem der Ansprüche 6 bis 8, **dadurch gekennzeichnet, dass** die Filtervorrichtung (18) wenigstes einen im Rinnenkörper (12) insbesondere lösbar befestigten, wasserdurchlässigen Filterelementträger (21) für die Filterelemente (19) aufweist.

10. Entwässerungseinrichtung nach einem der Ansprüche 7 bis 9, **dadurch gekennzeichnet, dass** im Falle von Filterelementen (19) mit flexibler Hüllwand (20) diese sich an die Form des Filterelementträgers (21) anschmiegend und dichtend an einer Innenwandung (22) des Rinnenkörpers (12) anliegend auf dem Filterelementträger (21) angeordnet sind.

11. Entwässerungseinrichtung nach Anspruch 9 oder 10, **dadurch gekennzeichnet, dass** der Filterelementträger (21) und die Filterelemente (19) gemeinsam ein aus dem Rinnenkörper (12) entnehmbares Filtermodul (26) bilden.

12. Entwässerungseinrichtung nach einem der Ansprüche 9 bis 11, **dadurch gekennzeichnet, dass** der Filterelementträger (21) oberhalb eines Rinnenbodens (15) des Rinnenkörpers (12) angeordnet ist und unterhalb des Filterelementträgers (21) von einem unteren Bereich des Rinnenkörpers (12) eine Ablaufrinne für gereinigtes Wasser gebildet ist.

13. Entwässerungseinrichtung nach einem der Ansprüche 6 bis 12, **dadurch gekennzeichnet, dass** als Filtermaterial eine Schüttung aus Filterkörnern, insbesondere Körnern aus Ionenaustauschermaterial, eingesetzt ist.

## Claims

1. Drainage device (11) for draining road, car park or roof surfaces, with a channel body (12) having a length and with filter material located in the channel body (12) for purifying water polluted by solid particles and/or dissolved contaminants, wherein above the filter material there is provided a water inflow body (27) having a flow-through section (31) with a plurality of flow-through openings (30), via which the contaminated water enters the filter material, and having a sedimentation chamber (32) for the sedimentation of suspended matter, wherein the water inflow body (27) has at least one water conducting element (33), via which the contaminated water can be conducted into the sedimentation chamber (32) and from there into the flow-through openings (30) or at least partially directly into the flow-through openings (30) while bypassing the sedimentation chamber (32), **characterised in that** the flow-through section (31) of the water inflow body (27) is represented by a dome-like raised area enclosed by the sedimentation chamber (32) of trench-like design.

2. Drainage device according to claim 1, **characterised in that** the water conducting element (33) is arranged above the sedimentation chamber (32) in such a way that, from a specified accruing water quantity, the water can be conducted at least partially directly into the flow-through openings (30) while bypassing the sedimentation chamber (32) by means of a ramp effect.

3. Drainage device according to claim 1 or 2, **characterised in that** the water conducting element (33) has an inward- and downward-inclined inflow slant (34).

4. Drainage device according to any of the preceding claims, **characterised in that** the water conducting element (33) is represented by a continuous edge of the water conducting body (27).

5. Drainage device according to any of the preceding claims, **characterised in that** the water inflow body (27) is placed on filter elements (19) of a filter device (18).

6. Drainage device according to any of the preceding claims, **characterised in that** the filter material is a part of a filter device (18), which substantially extends along the length of the channel body (12) and comprises several filter elements (19), which can be handled and removed from the channel body (12) individually if required and each of which has a water-permeable cover wall (20) with the filter material being located within the cover wall (20).

7. Drainage device according to claim 6, **characterised in that** the water-permeable cover wall (20) is flexible.

8. Drainage device according to claim 6 or 7, **characterised in that** the water-permeable cover wall (20) is represented by a sack.

9. Drainage device according to any of claims 6 to 8, **characterised in that** the filter device (18) has at least one filter element support (21) for the filter elements (19), which is in particular secured releasably in the channel body (12).

10. Drainage device according to any of claims 6 to 9, **characterised in that** filter elements (19) with a flexible cover wall (20) are arranged on the filter element support (21) in such a way that they are in nestling and sealing contact with an inner wall (22) of the channel body (12).

11. Drainage device according to claim 9 or 10, **characterised in that** the filter element support (21) and the filter elements (19) together form a filter module (26), which can be removed from the channel body (12).

12. Drainage device according to any of claims 9 to 11, **characterised in that** the filter element support (21) is located above a channel base (15) of the channel body (12), and **in that** a discharge channel for purified water from a lower region of the channel body (12) is formed below the filter element support (21).

13. Drainage device according to any of claims 6 to 12, **characterised in that** a fill of filter grains, in particular grains of an ion-exchange material, is used as filter material.

## Revendications

1. Dispositif de drainage (11) servant à drainer des surfaces de route, de parking ou de toit, avec un corps de rigole (12) présentant une longueur et un matériau filtrant se trouvant dans le corps de rigole (12), servant à nettoyer de l'eau chargée de particules de matières solides et/ou de substances nocives dissoutes, dans lequel est disposé au-dessus du matériau filtrant un corps d'arrivée d'eau (27), qui présente une section de passage de flux (31) pourvue de plusieurs ouvertures de passage de flux (30), par l'intermédiaire de laquelle de l'eau souillée parvient dans le matériau filtrant, et possède un espace de sédimentation (32) servant à la sédimentation de matières en suspension, dans lequel le corps d'arrivée d'eau (27) présente au moins un élément d'acheminement d'eau (33), par l'intermédiaire duquel de l'eau souillée peut être acheminée dans l'espace de sédimentation (32) et de là dans les ouvertures de passage de flux (30) ou au moins en partie en contournant l'espace de sédimentation (32) directement dans les ouvertures de passage de flux (30), **caractérisé en ce que** la section de passage de flux (31) du corps d'arrivée d'eau (27) est formée par une surélévation de type dôme, qui est entourée par l'espace de sédimentation (32) réalisé à la manière d'une fosse.

2. Dispositif de drainage selon la revendication 1, **caractérisé en ce que** l'élément d'acheminement d'eau (33) est disposé de telle manière au-dessus de l'espace de sédimentation (32) que de l'eau peut être acheminée directement dans les ouvertures de passage de flux (30) à partir d'une quantité d'eau accumulée donnée au moyen d'un effet de tremplin au moins en partie en contournant l'espace de sédimentation (32).

3. Dispositif de drainage selon la revendication 1 ou 2, **caractérisé en ce que** l'élément d'acheminement d'eau (33) présente une surface oblique d'arrivée (34) inclinée vers l'intérieur et vers le bas.

4. Dispositif de drainage selon l'une quelconque des revendications précédentes, **caractérisé en ce que** l'élément d'acheminement d'eau (33) est formé par un bord périphérique du corps d'acheminement d'eau (27).

5. Dispositif de drainage selon l'une quelconque des revendications précédentes, **caractérisé en ce que** le corps d'arrivée d'eau (27) est placé sur des éléments filtrants (19) d'un dispositif filtrant (18).

6. Dispositif de drainage selon l'une quelconque des revendications précédentes, **caractérisé en ce que** le matériau filtrant fait partie intégrante d'un dispositif filtrant (18) s'étendant sensiblement sur la longueur du corps de rigole (12), qui présente plusieurs éléments filtrants (19) pouvant être manipulés individuellement et pouvant être retirés si besoin hors du corps de rigole (12), qui possèdent respectivement une paroi enveloppante (20) perméable à l'eau avec le matériau filtrant se trouvant à l'intérieur de la paroi enveloppante (20).

7. Dispositif de drainage selon la revendication 6, **caractérisé en ce que** la paroi enveloppante (20) perméable à l'eau est flexible.

8. Dispositif de drainage selon la revendication 6 ou 7, **caractérisé en ce que** la paroi enveloppante (20) perméable à l'eau est formée par un sac.

9. Dispositif de drainage selon l'une quelconque des revendications 6 à 8, **caractérisé en ce que** le dispositif filtrant (18) présente au moins un support d'élément filtrant (21) perméable à l'eau fixé en particulier de manière amovible dans le corps de rigole (12) pour les éléments filtrants (19).

10. Dispositif de drainage selon l'une quelconque des revendications 7 à 9, **caractérisé en ce que**, dans le cas d'éléments filtrants (19) avec une paroi enveloppante (20) flexible, ceux-ci sont disposés sur le support d'élément filtrant (21) en épousant étroitement la forme du support d'élément filtrant (21) et en reposant de manière étanche au niveau d'une paroi intérieure (22) du corps de rigole (12).

11. Dispositif de drainage selon la revendication 9 ou 10, **caractérisé en ce que** le support d'élément filtrant (21) et les éléments filtrants (19) forment conjointement un module filtrant (26) pouvant être retiré hors du corps de rigole (12).

12. Dispositif de drainage selon l'une quelconque des revendications 9 à 11, **caractérisé en ce que** le support d'élément filtrant (21) est disposé au-dessus d'un fond de rigole (15) du corps de rigole (12) et une rigole d'évacuation pour de l'eau nettoyée est formée sous le support d'élément filtrant (21) par une zone inférieure du corps de rigole (12).

13. Dispositif de drainage selon l'une quelconque des revendications 6 à 12, **caractérisé en ce qu'**une charge de grains filtrants, en particulier de grains composés d'un matériau échangeur d'ions, est employée en tant que matériau filtrant.
